# EUROPEAN PATENT SPECIFICATION

(11) **EP 4 220 816 B1**
(45) Date of publication and mention of the grant of the patent: **27.08.2025**
(21) Application number: 23153567.5
(22) Date of filing: 26.01.2023
(51) Int. Cl.: H01M 10/42, H01M 50/204, H01M 50/317, H01M 50/35, H01M 50/249, H01M 50/375

(54) **BATTERY APPARATUS AND METHOD FOR CONTROLLING BATTERY APPARATUS TO EXHAUST GAS**
BATTERIEVORRICHTUNG UND VERFAHREN ZUR STEUERUNG DER BATTERIEVORRICHTUNG FÜR ABGAS
APPAREIL DE BATTERIE ET PROCÉDÉ DE COMMANDE D'APPAREIL DE BATTERIE POUR ÉVACUER DES GAZ

(30) Priority: 27.01.2022 CN 202210101795
(43) Date of publication of application: 02.08.2023
(73) Proprietor: Huawei Digital Power Technologies Co., Ltd., Shenzhen, 518043 (CN)
(72) Inventor: MENG, Hao, Shenzhen, 518043 (CN); ZHANG, Huan, Shenzhen, 518043 (CN); MA, Hui, Shenzhen, 518043 (CN); HU, Rongheng, Shenzhen, 518043 (CN)
(74) Representative: Gill Jennings & Every LLP

(56) References cited:
- GB-A- 2 460 946
- US-A1- 2016 093 842
- US-A1- 2020 006 821

## Description

### TECHNICAL FIELD

The present invention relates to the field of battery technologies, and in particular, to a battery apparatus, and a method for controlling a battery apparatus to exhaust gas.

### BACKGROUND

With rapid development of the new energy vehicle industry, because a battery serves as one of the most important parts in an entire new energy vehicle, security of the battery is extremely important. Currently, in a process of assembling a new energy vehicle, the battery is extremely safe due to protection of a vehicle manufacturer. However, cases such as a short circuit, a heavy stroke of external force, and an excessively high ambient temperature inevitably occur in the battery. As a result, the battery is damaged and a danger is caused. Existing batteries such as a lithium battery and a NiMH battery are used as examples. If cases such as a short circuit, a heavy stroke of external force, and an excessively high ambient temperature occur in the batteries, each of the batteries generates a large amount of high-temperature and high-pressure flammable gas. If the battery cannot exhaust, to the outside in time, the high-temperature and high-pressure flammable gas generated inside, the battery may have a risk of explosion. This not only causes an economic loss to a user, but also even endangers the user's life safety.

US 2020/0006821 A1 discloses a rack-type power supply device which includes a plurality of battery modules each of which accommodates a plurality of secondary battery cells, a rack main body that vertically accommodates battery modules in a horizontal posture like a plurality of steps with gaps between the battery modules, and a plurality of cooling fans that are arranged on a front surface side of the rack main body and blow cooling air into the gaps between battery modules. The rack main body also includes a back-side duct in which cooling air having passed through the gaps flows upward on a back surface side of the battery modules. In addition, rack main body includes an air outlet for discharging cooling air having passed through the back-side duct on a top surface side. The cooling fan is disposed to be shifted from the gap between the battery modules in front view of the rack main body.

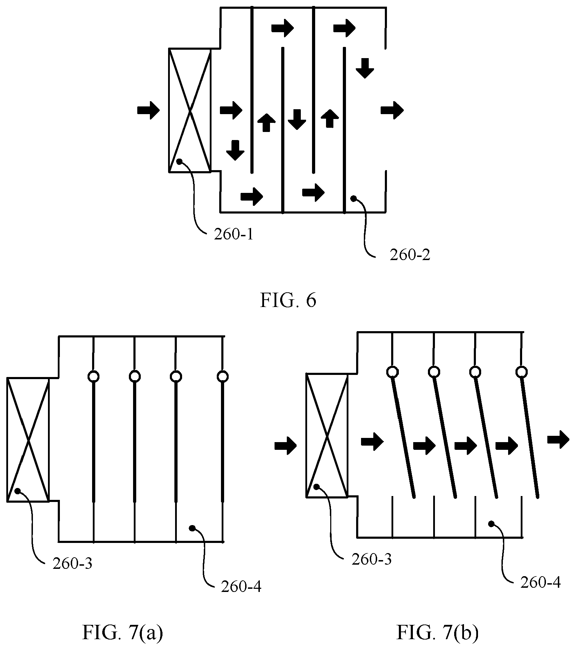

GB 2 460 946 A discloses a modular battery box with cooling provision. A battery box 1 comprises a plate like first member 20 disposed on one side of a storage chamber 2 and a plate-like second member 30 disposed on the other side of the storage chamber 2 for supporting a plurality of battery modules 10 between the first member 20, wherein the first member 20 has feed ports 21 in airtight communication with inlets 11 opening at one end of battery modules 10 for introducing air therein, the second member 30 has discharge ports 31 for discharging the air introduced through the feed ports 21 into the interior of the battery modules 10 to the exterior, and at least one of the first member 20 or the second member 30 is attached in a detachable manner to one side or the other side of the storage chamber 2. Dust sensitive features such as electrical connections (19b, figure 6) are separated from the cooling air flow. The battery box may be used in a hybrid railway vehicle.

US 2016/0093842 A1 discloses a battery module which includes a housing that defines an inner volume and includes an airflow path from an aperture formed in a first end member of the housing, through the inner volume, and to an aperture formed in a second end member of the housing; a plurality of power cells mounted in the inner volume of the housing, each of the power cells including a vent member at an end of the power cell; and a flame arrestor mounted across the airflow path and between the plurality of power cells and the aperture formed in the second end member of the housing. The flame arrestor includes a screen that includes a plurality of fluid pathways sized to allow an airflow from the airflow path through the fluid pathways and sized to impede a combusted fluid to pass therethrough.

### SUMMARY

To resolve the foregoing problem, embodiments of this application provide a battery apparatus, and a method for controlling a battery apparatus to exhaust gas. An isolation baffle is disposed inside a protection housing, to isolate the inside of the protection housing into two interconnected regions. Exhaust assemblies are disposed outside the protection housing and respectively communicate with the two regions. When parts such as a temperature sensor and a gas sensor detect that a battery module exhausts high-temperature and high-pressure flammable gas to the outside, the exhaust assembly in one region may be controlled to inhale gas, and the exhaust assembly in the other region may be controlled to exhaust gas, so that an air flow is formed in the two regions. Therefore, the high-temperature and high-pressure gas exhausted by the battery module is exhausted, and heat inside the protection housing is taken away, thereby reducing a risk of explosion of the battery module.

Therefore, the following technical solutions are used in the embodiments of this application.

According to a first aspect, an embodiment of this application provides a battery apparatus, including: a protection housing, where at least one battery module is disposed in the protection housing; at least one first exhaust assembly disposed on the protection housing; at least one second exhaust assembly disposed on the protection housing; and a control unit, configured to control the at least one first exhaust assembly to be in a first state and the at least one second exhaust assembly to be in a second state, or control the at least one first exhaust assembly to be in the second state and the at least one second exhaust assembly to be in the first state. The first state is that gas outside the protection housing is inhaled into the protection housing, and the second state is that gas inside the protection housing is exhausted to the outside of the protection housing, to exhaust, out of the battery apparatus, a high-temperature and high-pressure gas generated by the at least one battery module, and take away heat inside the protection housing.

In this implementation, two types of exhaust assemblies are disposed on the protection housing in the battery apparatus. One type of exhaust assembly is controlled to inhale gas, and the other type of exhaust assembly is controlled to exhaust gas, so that an air flow is formed in two regions. Therefore, the high-temperature and high-pressure gas exhausted by the battery module inside the protection housing is taken out of the protection housing, and heat inside the protection housing is taken away, thereby reducing a risk of explosion of the battery module.

According to the invention, the apparatus further includes an isolation baffle, where the isolation baffle is fastened inside the protection housing, and divides the protection housing into a first region and a second region. The first region communicates with the second region. The at least one first exhaust assembly communicates with the second region, and the at least one second exhaust assembly communicates with the first region.

In this implementation, the isolation baffle is added to the inside of the protection housing to divide the inside of the protection housing into two regions. One region communicates with one type of exhaust assembly, and the other region communicates with the other type of exhaust assembly. Therefore, a flow path of gas becomes longer. This helps the exhaust assembly rapidly reduce an amount of gas inside the battery apparatus and rapidly reduce a concentration of the flammable gas exhausted by the battery module.

According to the invention, each battery module passes through and is fastened to the isolation baffle. One part of each battery module is in the first region, and the other part of each battery module is in the second region.

In this implementation, each battery module is enabled to pass through and to be fastened to the isolation baffle. One part of each battery module is enabled to be in one region, and the other part is enabled to be in the other region, so that heat in the battery module is dissipated based on a region. This helps the exhaust assembly rapidly reduces an amount of gas inside the battery apparatus.

In an implementation, the apparatus further includes: at least one temperature sensor that is disposed inside the protection housing and/or inside the at least one battery module and that is configured to detect a temperature inside the protection housing and a temperature inside the battery module. The control unit is specifically configured to receive a temperature value detected by the at least one temperature sensor, determine whether the temperature value is greater than a specified threshold, and when the temperature value is greater than the specified threshold, control the at least one first exhaust assembly to be in the first state and the at least one second exhaust assembly to be in the second state, or control the at least one first exhaust assembly to be in the second state and the at least one second exhaust assembly to be in the first state.

In this implementation, the temperature sensor is disposed inside the protection housing. The temperature inside the protection housing is detected to monitor whether the battery module generates high-temperature and high-pressure flammable gas. If it is detected that the temperature exceeds the specified temperature, it is considered that the battery module generates the high-temperature and high-pressure flammable gas. The first exhaust assembly and the second exhaust assembly may be controlled to operate, to exhaust, to the outside of the rotection housing, the high-temperature and high-pressure flammable gas generated by the battery module. This avoids a risk of explosion caused by an excessively high temperature, excessively high pressure, or flammable gas with an excessively high concentration inside the battery apparatus.

In an implementation, the apparatus further includes: at least one gas sensor that is disposed inside the protection housing and that is configured to detect gas composition inside the protection housing. The control unit is specifically configured to receive a detection result sent by the at least one gas sensor, determine whether the detection result has a specified gas, and when the detection result includes the specified gas, control the at least one first exhaust assembly to be in the first state and the at least one second exhaust assembly to be in the second state, or control the at least one first exhaust assembly to be in the second state and the at least one second exhaust assembly to be in the first state.

In this implementation, the temperature sensor is disposed inside the protection housing. Whether flammable gas composition exists inside the protection housing is detected to monitor whether the battery module generates high-temperature and high-pressure flammable gas. If a detection result includes the flammable gas composition, it is considered that the battery module generates the high-temperature and high-pressure flammable gas. The first exhaust assembly and the second exhaust assembly may be controlled to operate, to exhaust, to the outside of the protection housing, the high-temperature and high-pressure flammable gas generated by the battery module. This avoids a risk of explosion caused by an excessively high temperature, excessively high pressure, or flammable gas with an excessively high concentration inside the battery apparatus.

In an implementation, when the at least one first exhaust assembly is not in the first state and the second state, the second region is isolated from the outside of the protection housing; and when the at least one second exhaust assembly is not in the first state and the second state, the first region is isolated from the outside of the protection housing.

In this implementation, when the first exhaust assembly and the second exhaust assembly are not in an operation state, the first exhaust assembly and the second exhaust assembly are in an off state, so that the inside of the protection housing is isolated from the outside, to prevent contaminants such as outside rain and impurities from entering the protection housing and contaminating the inside of the battery apparatus.

In an implementation, the at least one first exhaust assembly and the at least one second exhaust assembly are respectively disposed on surfaces of different side faces of the protection housing.

In this implementation, the first exhaust assembly and the second exhaust assembly are respectively disposed on different side faces of the protection housing, to prevent the first exhaust assembly (or the second exhaust assembly) from inhaling again, into the protection housing, gas exhausted by the second exhaust assembly (or the first exhaust assembly) to the outside of the protection housing, which reduces a cooling effect of the battery apparatus.

In an implementation, the apparatus further includes a heat dissipation channel. One port of the heat dissipation channel communicates with the first region, and the other port of the heat dissipation channel communicates with the second region, so that gas in the first region flows into the second region, or gas in the second region flows into the first region.

In an implementation, the heat dissipation channel is disposed on the control unit, and a part of the heat dissipation channel includes a housing of the control unit.

In this implementation, the control unit is usually a BMS. Generally, there are heat emitting parts such as a transformer and a frequency converter inside the BMS. In addition, after the battery module generates high-temperature and high-pressure flammable gas, a temperature of the BMS also increases. To better take away heat in the BMS, the heat dissipation channel may be disposed on a surface that is of the BMS and that is close to the protection housing. The heat in the BMS can be taken away by gas passing through the heat dissipation channel, so that the temperature in the control unit is reduced.

In an implementation, the apparatus further includes at least one first exhaust fan disposed in the heat dissipation channel, so that gas in the first region flows into the second region, or gas in the second region flows into the first region.

In this implementation, the at least one first exhaust fan is added in the heat dissipation channel, to enhance an air flow generated by the first exhaust assembly and the second exhaust assembly inside the protection housing, thereby improving a speed at which the battery apparatus exhausts high-temperature and high-pressure flammable gas to the outside.

In an implementation, the apparatus further includes at least one second exhaust fan that is respectively disposed at an exhaust port of the at least one battery module, so that gas in the first region flows into the second region through the battery module, or gas in the second region flows into the first region through the battery module.

In this implementation, the second exhaust fan is disposed at the exhaust port of each battery module. This not only can improve a speed at which the battery module exhausts high-temperature and high-pressure flammable gas into the protection housing, but also can rapidly diffuse the high-temperature and high-pressure flammable gas in the second region into the entire second region, thereby reducing a concentration of a local flammable gas and improving efficiency of heat exchange between the inside and the outside.

If the battery module is a conductive structure, a part of gas is enabled to flow into the second region through the battery module, so that heat in the battery module can be taken away, thereby greatly reducing a temperature of the battery module.

In an implementation, the exhaust port of the at least one battery module is located in the second region.

In this implementation, the battery module is installed in the protection housing. Generally, an electrode terminal and the exhaust port are disposed close to a side of the control unit, to better manage the battery module and efficiently exhaust gas to the outside of the protection housing.

In an implementation, the apparatus further includes at least one third exhaust fan disposed on the isolation baffle, so that gas in the first region flows into the second region, or gas in the second region flows into the first region.

In this implementation, the at least one third exhaust fan is disposed on the isolation baffle, so that the gas in the first region flows into the second region, or the gas in the second region flows into the first region. Therefore, heat generated by the battery module in the first region is taken out of the protection housing, thereby further reducing a temperature of the battery module.

According to a second aspect, an embodiment of this application provides a method for controlling a battery apparatus to exhaust gas, including: receiving detection data of a detection unit, where the detection data is a temperature value and/or gas composition; and when the detection data is greater than a specified threshold and/or includes a specified gas, controlling at least one first exhaust assembly to be in a first state and at least one second exhaust assembly to be in a second state, or controlling the at least one first exhaust assembly to be in the second state and the at least one second exhaust assembly to be in the first state. The first state is that gas outside the protection housing is inhaled into the protection housing, and the second state is that gas inside the protection housing is exhausted to the outside of the protection housing. The at least one first exhaust assembly and the at least one second exhaust assembly are separately disposed on the protection housing, and at least one battery module is embedded in an isolation baffle.

According to the invention, when the isolation baffle is disposed inside the protection housing, the isolation baffle divides the inside of the protection housing into a first region and a second region, and the first region communicates with the second region. The at least one first exhaust assembly communicates with the second region, and the at least one second exhaust assembly communicates with the first region. The method further includes: controlling the at least one first exhaust assembly to successively exhaust gas outside the protection housing into the second region and the first region, and then enabling the gas to be exhausted to the outside of the protection housing from the at least one second exhaust assembly; or controlling the at least one second exhaust assembly to successively exhaust gas outside the protection housing into the first region and the second region, and then enabling the gas to be exhausted to the outside of the protection housing from the at least one first exhaust assembly.

In an implementation, when a heat dissipation channel is disposed in the protection housing, and at least one first exhaust fan is disposed in the heat dissipation channel, the method further includes: controlling the at least one first exhaust fan to exhaust gas in the first region into the second region, or exhaust gas in the second region into the first region.

In an implementation, when a second exhaust fan is disposed at an exhaust port of the at least one battery module, the method further includes: controlling the at least one second exhaust fan to exhaust gas in the first region into the second region through the battery module, or exhaust gas in the second region into the first region through the battery module.

In an implementation, when at least one third exhaust fan is disposed in the first region, the method further includes: controlling the at least one third exhaust fan to exhaust gas in the first region into the second region, or exhaust gas in the second region into the first region.

### BRIEF DESCRIPTION OF DRAWINGS

The following briefly describes the accompanying drawings required in description of the embodiments or the conventional technology.
FIG. 1 is a schematic diagram of an architecture of a solar power generation system;
FIG. 2 is a schematic diagram of a section of a battery apparatus according to the conventional technology;
FIG. 3 is a three-dimensional schematic diagram of a side section of a battery apparatus according to an embodiment of this application;
FIG. 4 is a three-dimensional schematic diagram of a front section of a battery apparatus according to an embodiment of this application;
FIG. 5 is a schematic diagram of a simplified structure of an isolation baffle according to an embodiment of this application;
FIG. 6 is a schematic diagram of a simplified structure of an exhaust assembly having a structure of "fan + labyrinth channel" according to an embodiment of this application;
FIG. 7(a) is a schematic diagram of a simplified structure obtained when an exhaust assembly having a structure of a shutter fan does not operate according to an embodiment of this application;
FIG. 7(b) is a schematic diagram of a simplified structure obtained when an exhaust assembly having a structure of a shutter fan operates according to an embodiment of this application;
FIG. 8 is a schematic diagram of a procedure in which a control unit controls a first exhaust assembly and a second exhaust assembly to operate according to an embodiment of this application;
FIG. 9 is a schematic diagram of flowing of an air flow when a first exhaust assembly inhales gas and a second exhaust assembly exhausts gas in a side section of a battery apparatus according to an embodiment of this application;
FIG. 10 is a schematic diagram of flowing of an air flow when a first exhaust assembly exhausts gas and a second exhaust assembly inhales gas in a side section of a battery apparatus according to an embodiment of this application;
FIG. 11 is a schematic diagram of flowing of an air flow when a first exhaust assembly inhales gas and a second exhaust assembly exhausts gas in a side section of a battery apparatus in which an exhaust fan exists in a heat dissipation channel according to an embodiment of this application;
FIG. 12 is a schematic diagram of flowing of an air flow when a first exhaust assembly exhausts gas and a second exhaust assembly inhales gas in a side section of a battery apparatus in which an exhaust fan exists in a heat dissipation channel according to an embodiment of this application;
FIG. 13 is a schematic diagram of a flowing direction of an air flow when an exhaust fan is disposed on each battery module in a side section of a battery apparatus according to an embodiment of this application;
FIG. 14 is a schematic diagram of a flowing direction of an air flow when an exhaust fan is disposed on each battery module in a side section of a battery apparatus according to an embodiment of this application;
FIG. 15 is a schematic diagram of a flowing direction of an air flow when an exhaust fan is disposed inside a first region in a side section of a battery apparatus according to an embodiment of this application; and
FIG. 16 is a schematic diagram of a flowing direction of an air flow when an exhaust fan is disposed inside a first region in a side section of a battery apparatus according to an embodiment of this application.

### DESCRIPTION OF EMBODIMENTS

The following describes technical solutions in embodiments of this application with reference to the accompanying drawings in embodiments of this application.

In the description of this application, direction or position relationships indicated by the terms "center", "up", "down", "front", "back", "left", "right", "vertical", "horizontal", "top", "bottom", "inside", "outside" are based on direction or position relationships shown in the accompanying drawings. This is merely intended to facilitate description of this application and simplify description, and is not intended to indicate or imply that the referred apparatus or element needs to have a specific direction, and be constructed and operated in the specific direction. Therefore, this should not be understood as a limitation of this application.

In the description of this application, it should be noted that, unless otherwise clearly specified and limited, terms "install", "connection", and "connect" should be understood in a broad sense, for example, may be a fixed connection, may be a detachable connection, or may be pressing against or an integral connection. A person of ordinary skill in the art may understand specific meanings of the foregoing terms in this application based on a specific situation.

In the descriptions of this specification, the described specific features, structures, materials, or characteristics may be combined in a proper manner in any one or more of embodiments or examples.

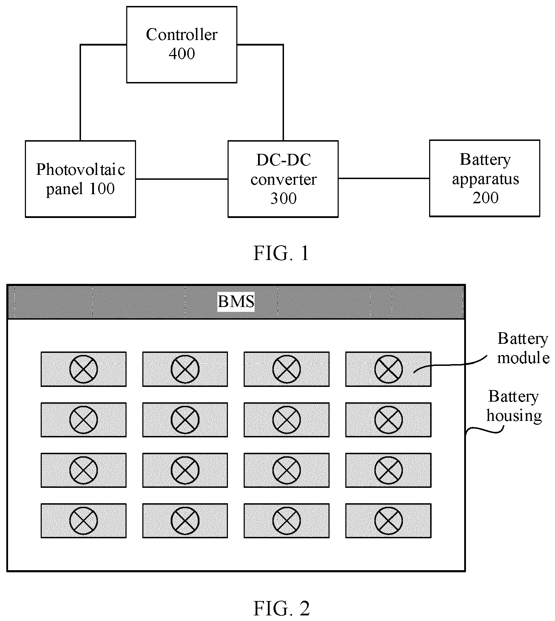

A battery apparatus protected in this application is usually assembled in an energy storage device or an energy storage system for use, for example, devices such as a solar power generation system, an outdoor energy storage cabinet, a base station, and an electric vehicle in different fields. In this application, the battery apparatus protected in this application is described below by using the solar power generation system as an example. As shown in FIG. 1, the solar power generation system usually includes a photovoltaic panel 100, a battery apparatus, a direct current-direct current (direct current-direct current, DC-DC) converter 300, and a controller 400. The photovoltaic panel 100 is configured to convert solar energy into direct-current electric energy, and then input the direct-current electric energy into the battery apparatus 200 by using the DC-DC converter 300. The controller 400 is usually a system on chip (system on chip, SoC), and is configured to control whether the photovoltaic panel 100 operates, and control whether the DC-DC converter 300 operates.

In this application, in a charging process of the battery apparatus 200, the controller 400 may control the photovoltaic panel 100 and the DC-DC converter 300 to operate. Because power of electric energy that is output by the photovoltaic panel 100 is affected by sunlight, the power of the output electric energy is unstable. The DC-DC converter 300 may convert a direct current of any power into a direct current of specified power, to charge the battery apparatus 200. In a discharging process of the battery apparatus 200, the controller 400 may control the photovoltaic panel 100 and the DC-DC converter 300 not to operate, and then the battery apparatus 200 provides electric energy for an external mains system and various loads.

In a battery apparatus in the conventional technology, as shown in FIG. 2, the battery apparatus includes at least a protection housing, a battery management system (battery management system, BMS), and a plurality of battery modules. The protection housing is of a groove structure, the plurality of battery modules are installed inside the protection housing, and the BMS is disposed at a port of the protection housing, and is fastened to the protection housing. Each battery module is electrically connected to the BMS, and implements functions of charging and providing electric energy by using the port on the BMS.

Generally, to prevent outside rain from leaking into the protection housing to cause cases such as corrosion to an outer surface of the battery module and a short circuit of a circuit on the battery module, the BMS and the protection housing usually form a closed structure. However, if the protection housing has a sealed structure, a large amount of high-temperature and high-pressure flammable gas generated inside the battery module is exhausted into the closed structure formed by the BMS and the protection housing. When pressure inside the battery module is the same as pressure inside the protection housing, the high-temperature and high-pressure flammable gas generated inside the battery module cannot be exhausted to the outside, and only the pressure inside the battery module and a concentration of the flammable gas are slightly reduced. Therefore, the battery module still has a risk of explosion.

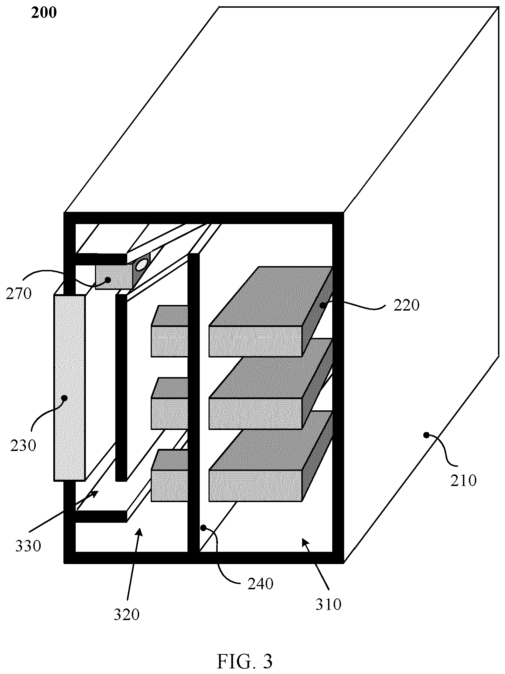

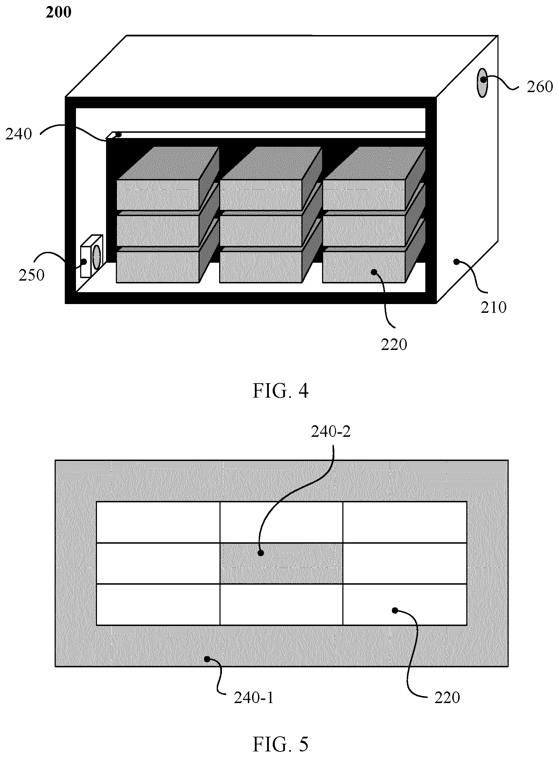

FIG. 3 and FIG. 4 are three-dimensional schematic diagrams obtained after a battery apparatus is sectioned according to an embodiment of this application.

To resolve the problem existing in the existing battery apparatus, a new battery apparatus is designed in this application. The battery apparatus 200 includes a protection housing 210, a plurality of battery modules 220, a control unit 230, an isolation baffle 240, at least one first exhaust assembly 250, and at least one second exhaust assembly 260. Structures of the parts and a connection relationship between the parts are specifically as follows.

The protection housing 210 usually has a groove structure, and the inside of the protection housing 210 is configured to place the battery module 220. In this application, before the battery module 220 is placed in the protection housing 210, each battery module 220 needs to pass through the isolation baffle 240, and all the battery modules 220 are isolated from each other, so that when each battery module 220 is placed inside the protection housing, the isolation baffle isolates the inside of the protection housing 210 into two regions: a first region 310 and a second region 320 shown in FIG. 3.

The isolation baffle 240 is configured to isolate the inside of the protection housing 210 into two regions. In this application, a shape of the isolation baffle 240 is usually similar to a cross section of a front sectional view of the protection housing 210, and an area of the isolation baffle 240 is slightly less than an area of the front sectional view of the protection housing 210. When the isolation baffle 240 is placed inside the protection housing 210, three sides of the isolation baffle 240 are in close contact with a surface inside the protection housing 210, and the rest side of the isolation baffle 240 is not in contact with the surface inside the protection housing 210. Therefore, a channel is formed between the rest side of the isolation baffle 240 and the surface inside the protection housing 210, so that the first region 310 and the second region 320 communicate with each other. In this way, gas in the first region 310 may flow into the second region 320 through the channel, and gas in the second region 320 may flow into the first region 310 through the channel.

A plurality of through-holes are disposed at a middle position of the isolation baffle 240, so that the battery modules 220 are embedded in the through-holes, and the battery modules 220 are fastened to the isolation baffle 240. In this application, a shape of the through-hole in the isolation baffle 240 is the same as a shape of a cross section in a direction in which the battery module 220 is embedded in the through-hole, so that each battery module 220 is relatively closed to the isolation baffle 240 after being embedded in the isolation baffle 240. If the battery modules 220 are embedded in the through-holes on the isolation baffle 240, and there is a gap between the battery module 220 and the isolation baffle 240, gas in the first region 310 enters the second region 320 through the gap, or gas in the second region 320 enters the first region 310 through the gap. This reduces a heat dissipation effect of the battery apparatus 200.

An arrangement manner of the through-holes on the isolation baffle 240 is associated with an arrangement manner in which the battery modules 220 are disposed inside the protection housing 210. For example, with reference to FIG. 4, when the battery modules 220 are disposed inside the protection housing 210 in an arrangement manner of "3 × 3", nine through-holes in the arrangement manner of "3 × 3" are constructed at corresponding positions in the isolation baffle 240. A distance between adjacent through-holes in a transverse direction is the same as a distance between adjacent battery modules 220 in a transverse direction, and a distance between adjacent through-holes in a longitudinal direction is the same as a distance between adjacent battery modules 220 in a longitudinal direction.

In this application, the isolation baffle 240 may have an overall structure shown in FIG. 3 to FIG. 4, or may be formed by splicing a plurality of sub-isolation baffles. For example, as shown in FIG. 5, if the battery modules 220 are tightly bonded to each other, and a channel is formed in the middle, two isolation baffles are required because the middle channel cannot communicate with the outside. An isolation baffle 240-1 is sleeved on a structure formed by the battery modules 220, and an isolation baffle 240-2 is embedded in a through-hole in the middle of the structure formed by the battery modules 220.

A ventilation valve for exhausting gas to the outside is usually disposed in the battery module 220, so that when high-temperature and high-pressure flammable gas is generated inside the battery module 220, the gas is exhausted to the outside of the battery module 220. In this application, all ventilation valves disposed in the battery module 220 are located in the second region 320, to better manage the battery module 220 and efficiently exhaust gas to the outside of the protection housing 210.

At least one first exhaust assembly 250 is fastened to the protection housing 210 and communicates with the second region 320 and the outside of the protection housing 210. At least one second exhaust assembly 260 is fastened to the protection housing 210 and communicates with the first region 310 and the outside of the protection housing 210. In this way, gas inside the protection housing 210 is exhausted to the outside of the protection housing 210, or gas outside the protection housing 210 is inhaled into the protection housing 210. In this application, if the first exhaust assembly 250 and the second exhaust assembly 260 are exhaust ports, the first exhaust assembly 250 and the second exhaust assembly 260 are respectively two through-holes on the protection housing, and the two through-holes are respectively located on surfaces of the protection housing 210 in which the first region 310 and the second region 320 are formed. If the first exhaust assembly 250 and the second exhaust assembly 260 are exhaust parts such as fans or air pumps, through-holes are respectively disposed at positions at which the first exhaust assembly 250 and the second exhaust assembly 260 are fastened to the protection housing 210. Therefore, the first exhaust assembly 250 and the second exhaust assembly 260 can exhaust gas inside the protection housing 210 to the outside of the protection housing 210, and inhale gas outside the protection housing 210 into the protection housing 210.

Generally, when the first exhaust assembly 250 and the second exhaust assembly 260 operate, the first exhaust assembly 250 (or the second exhaust assembly 260) exhausts the gas inside the protection housing 210 to the outside of the protection housing 210, and then the second exhaust assembly 260 (or the first exhaust assembly 250) inhales the gas outside the protection housing 210 into the protection housing 210, to form an air flow flowing from the first region 310 to the second region 320 or an air flow flowing from the second region 320 to the first region 310 is formed inside the protection housing 210. In this application, to prevent the second exhaust assembly 260 from inhaling again, into the protection housing 210, gas exhausted to the outside of the protection housing 210 by the first exhaust assembly 250, the first exhaust assembly 250 and the second exhaust assembly 260 are respectively fastened to two different side faces of the protection housing 210.

Preferably, with reference to FIG. 3, the at least one first exhaust assembly 250 and the at least one second exhaust assembly 260 are respectively fastened to two opposite side faces of the protection housing 210. Certainly, positions at which the first exhaust assembly 250 and the second exhaust assembly 260 are fastened are not limited to the foregoing preferred positions. If an installation position of the battery apparatus 200 is limited, the first exhaust assembly 250 and the second exhaust assembly 260 may alternatively be installed on a surface on a same side of the protection housing 210. This is not limited in this application.

In this application, the first exhaust assembly 250 and the second exhaust assembly 260 are unidirectional circulation apparatuses. To be specific, when the exhaust assembly operates, gas inside the protection housing 210 is exhausted to the outside of the protection housing 210, and no air flow in which gas outside the protection housing 210 flows into the protection housing 210 is generated; or gas outside the protection housing 210 is exhausted to the inside of the protection housing 210, and no air flow in which gas inside the protection housing 210 flows to the outside of the protection housing 210 is generated. This avoids gas backflow, so that an exhausted high-temperature and high-pressure flammable gas is prevented from flowing back to a region in which the exhaust assembly is located, and flammable gas with a high concentration is prevented from converging in the region. When the exhaust assembly does not operate, no air flow in which gas outside the protection housing 210 flows into the protection housing 210 is generated, and no air flow in which gas inside the protection housing 210 flows to the outside of the protection housing 210 is generated, so that the battery apparatus 200 has a sealed structure in a normal case. Preferably, the first exhaust assembly 250 and the second exhaust assembly 260 may use a structure of "fan + labyrinth channel", a shutter-type structure, or another structure. This is not limited in this application.

Preferably, with reference to FIG. 6, the exhaust assembly may include a fan 260-3 and a labyrinth channel 260-2. When the fan 260-3 does not operate, there is no air flow inside and outside the protection housing 210, so that an outside gas cannot enter the inside of the protection housing 210 through the labyrinth channel 260-2, and an inside gas cannot enter the outside of the protection housing 210 through the labyrinth channel 260-2. When the fan 260-3 operates, a generated air flow can enter the inside of the protection housing 210 through the labyrinth channel 260-2 or flow out of the outside of the protection housing 210 through the labyrinth channel 260-2.

Preferably, with reference to FIG. 7(a) and FIG. 7(b), the exhaust assembly may be a shutter fan including a fan 260-3 and a movable channel 260-4. A movable baffle in the movable channel 260-4 may be fastened in the channel by using a movable assembly. When the fan 260-3 does not operate, there is no air flow inside and outside the protection housing 210. Therefore, the movable baffle is in contact with the channel under action of gravity, so that the movable channel is in a plugged state, and the inside and outside of the protection housing 210 are isolated from each other, as shown in FIG. 7(a). When the fan 260-3 operates, a generated air flow can blow the movable baffle, so that the movable baffle is disconnected from the channel, and the air flow can enter the inside of the protection housing 210 through the movable channel 260-4, or flow out of the outside of the protection housing 210 through the movable channel 260-4, as shown in FIG. 7(b).

The first exhaust assembly 250 and the second exhaust assembly 260 may be electrically connected to the control unit 230, and then the control unit 230 controls whether the first exhaust assembly 250 and the second exhaust assembly 260 operate. In this application, the control unit 230 is usually a BMS, and may establish communication with detection units such as a temperature sensor and a gas sensor. When detecting that the battery module 220 exhausts high-temperature and high-pressure flammable gas to the outside, the detection unit (not shown in the figure) may send a detection result to the control unit 230. The control unit 230 controls the first exhaust assembly 250 and the second exhaust assembly 260 to operate, to exhaust, out of the battery apparatus 200, the high-temperature and high-pressure flammable gas generated by the battery module 220. This avoids a risk of explosion caused by an excessively high temperature, excessively high pressure, or flammable gas with an excessively high concentration inside the battery apparatus 200.

For example, if the detection unit is the temperature sensor, the temperature sensor may be disposed in the battery module 220, or may be disposed in the control unit 230, and is configured to detect a temperature inside the battery apparatus 200, and send a detection result to the control unit 230. After receiving the detection result, the control unit 230 discards the detection result if it is detected that the temperature is not greater than a specified temperature, and does not perform another operation. If it is detected that the temperature is greater than the specified temperature, the control unit 230 starts the first exhaust assembly 250 and the second exhaust assembly 260 to operate.

If the detection unit is the gas sensor, the gas sensor is usually disposed inside the protection housing 210, and is configured to detect air pressure inside the protection housing 210, and send a detection result to the control unit 230. After receiving the detection result, the control unit 230 discards the detection result if it is detected that the pressure is not greater than specified pressure, and does not perform another operation. If it is detected that the pressure is greater than the specified pressure, the control unit 230 starts the first exhaust assembly 250 and the second exhaust assembly 260 to operate.

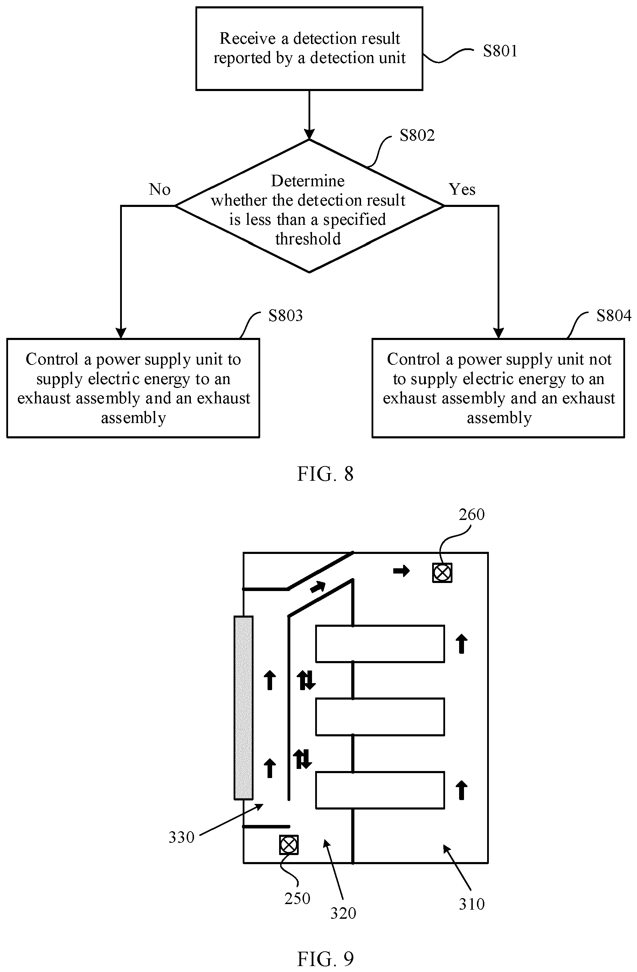

In this application, the foregoing operation process is usually performed by the control unit such as a microprocessor (microprocessor, MCU) in the BMS or a system-on-a-chip (system-on-a-chip, SoC). An implementation process is shown in FIG. 8, and is specifically as follows.

Step S801: Receive detection data of a detection unit. The detection unit may be at least one of a temperature sensor and a gas sensor, and therefore a detection result is at least one of temperature data, gas pressure data, and gas composition data.

Step S802: Determine whether a detection result is greater than a specified threshold or whether a specified gas is included; and perform step S804 if the detection result is not greater than the specified threshold or the specified gas is not included; or perform step S803 if the detection result is greater than the specified threshold or the specified gas is included.

Step S803: Control the at least one first exhaust assembly 250 to be in a first state and the at least one second exhaust assembly 260 to be in a second state, or control the at least one first exhaust assembly 250 to be in the second state and at least one second exhaust assembly 260 to be in the first state. The first state is that gas outside the protection housing 210 is inhaled into the protection housing 210, and the second state is that gas inside the protection housing 210 is exhausted to the outside of the protection housing 210.

Step S804: Control the first exhaust assembly 250 and the second exhaust assembly 260 not to operate.

With reference to FIG. 9, if the detection result received by the control unit indicates that the temperature sensor detects that a temperature inside the protection housing 210 is excessively high, and/or the gas sensor detects that air pressure inside the protection housing 210 is relatively high, and/or the gas sensor detects that the protection housing 210 includes a specified gas, for example, flammable gas such as carbon monoxide (CO) or methane (CH₄), the control unit controls the first exhaust assembly 250 to inhale gas into the protection housing 210, and controls the second exhaust assembly 260 to exhaust gas to the outside of the protection housing 210. The gas inhaled by the first exhaust assembly 250 flows into the second region 320, forms convection at each battery module 220, and then flows into the first region 310 together with high-temperature and high-pressure flammable gas exhausted by the battery module 220, and is exhausted to the outside of the protection housing 210 through the first exhaust assembly 250, so that the high-temperature and high-pressure flammable gas exhausted by the battery module 220 is exhausted from the inside of the battery apparatus 200. In addition, this further reduces a temperature inside the battery apparatus 200, and improves security of the battery apparatus 200.

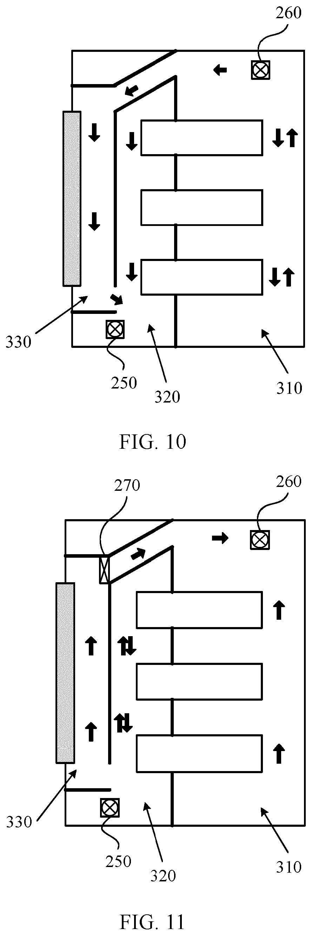

With reference to FIG. 10, if the detection result received by the control unit indicates that the temperature sensor detects that a temperature inside the protection housing 210 is excessively high, and/or the gas sensor detects that air pressure inside the protection housing 210 is relatively high, and/or the gas sensor detects that the protection housing 210 includes a specified gas, the control unit controls the second exhaust assembly 260 to inhale gas into the protection housing 210, and controls the first exhaust assembly 250 to exhaust gas to the outside of the protection housing 210. The gas inhaled by the second exhaust assembly 260 flows into the first region 310, forms convection inside the first region 310 to take away heat in the first region 310, then flows into the second region 320, and is further exhausted to the outside of the protection housing 210 through the first exhaust assembly 250 together with high-temperature and high-pressure flammable gas exhausted by the battery module 220, so that the high-temperature and high-pressure flammable gas exhausted by the battery module 220 is exhausted from the inside of the battery apparatus 200. In addition, this further reduces a temperature inside the battery apparatus 200, and improves security of the battery apparatus 200.

It should be noted that, an example in which the first exhaust assembly 250 inhales gas and the second exhaust assembly 260 exhausts gas is used. Because the gas exhausted by the second exhaust assembly 260 includes not only the gas inhaled by the first exhaust assembly 250 but also high-temperature and high-pressure flammable gas exhausted by the battery module 220, the control unit controls the second exhaust assembly 260 to have higher power than the first exhaust assembly 250, so that an amount of exhausted air of the second exhaust assembly 260 is greater than an amount of exhausted air of the first exhaust assembly 250, to ensure that the second exhaust assembly 260 exhausts the high-temperature and high-pressure flammable gas in time.

In this embodiment of this application, the isolation baffle 240 is disposed inside the protection housing 210, to isolate the inside of the protection housing 210 into two interconnected regions. Exhaust assemblies are disposed outside the protection housing and respectively communicate with the two regions. One exhaust assembly is controlled to inhale gas and the other exhaust assembly is controlled to exhaust gas, to form an air flow in the two regions, so that a high-temperature and high-pressure gas exhausted by the battery module is exhausted. In addition, heat inside the protection housing is taken away, thereby reducing a risk of explosion of the battery module.

If the control unit 230 is a BMS, generally, there are heat emitting parts such as a transformer and a frequency converter inside the BMS. In addition, after the battery module 220 generates high-temperature and high-pressure flammable gas, a temperature of the BMS also increases. To better take away heat in the BMS, the BMS may be designed as a structure shown in FIG. 3, to be specific, a heat dissipation channel 330 is disposed on a surface that is of the BMS and that is close to the inside of the protection housing 210. An air outlet at one end of the heat dissipation channel 330 communicates with the first region 310, and an air outlet at the other end of the heat dissipation channel 330 communicates with the second region 320. Optionally, a part of a structure of the heat dissipation channel 330 may be a housing of the BMS.

With reference to FIG. 9, an example in which the first exhaust assembly 250 inhales gas and the second exhaust assembly 260 exhausts gas is used. After the first exhaust assembly 250 inhales the gas, the gas enters the first region 310 through the heat dissipation channel 330 together with high-temperature and high-pressure flammable gas exhausted by the battery module 220 in the second region 320, and then is exhausted to the outside of the protection housing 210 through the second exhaust assembly 260. With reference to FIG. 10, an example in which the second exhaust assembly 260 inhales gas and the first exhaust assembly 250 exhausts gas is used. After the second exhaust assembly 260 inhales the gas, the gas enters the second region 320 through the heat dissipation channel 330, and then is exhausted to the outside of the protection housing 210 through the first exhaust assembly 250 together with high-temperature and high-pressure flammable gas exhausted by the battery module 220 in the second region 320.

In this embodiment of this application, the heat dissipation channel 330 is disposed on the surface that is of the BMS and that is close to the inside of the protection housing 210, so that in a process in which the two exhaust assemblies form an air flow inside the protection housing to exhaust high-temperature and high-pressure flammable gas to the outside of the protection housing 210, heat generated in the BMS can also be taken away. This avoids an excessively high temperature in the BMS, which causes burnout of an internal element.

With reference to FIG. 3 again, at least one first exhaust fan 270 may be disposed in the heat dissipation channel 330, to improve a flowing speed of an air flow in the heat dissipation channel 330. The first exhaust fan 270 may be electrically connected to the control unit 230. The control unit 230 controls whether the first exhaust fan 270 operates.

As shown in FIG. 11, an example in which the control unit 230 controls the first exhaust assembly 250 to inhale gas and the second exhaust assembly 260 to exhaust gas is used. The control unit 230 controls the first exhaust fan 270 to rotate clockwise (or counterclockwise), so that an air flow generated by the first exhaust fan 270 is the same as an air flow generated by the first exhaust assembly 250 and the second exhaust assembly 260 inside the protection housing 210. Therefore, the first exhaust fan 270 improves a flowing speed of gas in the heat dissipation channel 330, thereby improving a speed at which the battery apparatus 200 exhausts high-temperature and high-pressure flammable gas to the outside. Optionally, in this case, the control unit 230 may control the first exhaust assembly 250 not to operate, so that the second exhaust assembly 260 directly exhausts the high-temperature and high-pressure flammable gas, thereby improving a speed at which the high-temperature and high-pressure flammable gas is exhausted.

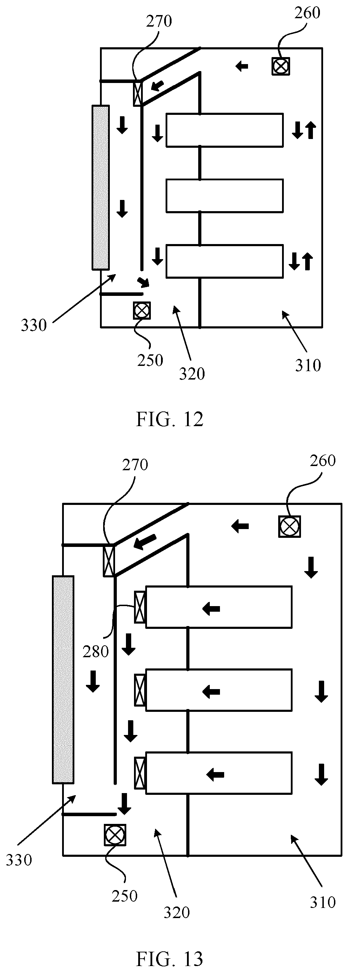

As shown in FIG. 12, an example in which the control unit 230 controls the first exhaust assembly 250 to exhaust gas and the second exhaust assembly 260 to inhale gas is used. The control unit 230 controls the first exhaust fan 270 to rotate counterclockwise (or clockwise), so that an air flow generated by the first exhaust fan 270 is the same as an air flow generated by the first exhaust assembly 250 and the second exhaust assembly 260 inside the protection housing 210. Therefore, the first exhaust fan 270 improves a flowing speed of gas in the heat dissipation channel 330, thereby improving a speed at which the battery apparatus 200 exhausts high-temperature and high-pressure flammable gas to the outside. Optionally, in this case, the control unit 230 may control the second exhaust assembly 260 not to operate, so that the first exhaust fan 270 and the first exhaust assembly 250 can quickly exhaust the high-temperature and high-pressure flammable gas.

In this embodiment of this application, the at least one first exhaust fan 270 is added in the heat dissipation channel 330, to enhance the air flow generated by the first exhaust assembly 250 and the second exhaust assembly 260 inside the protection housing 210, thereby improving a speed at which the battery apparatus 200 exhausts high-temperature and high-pressure flammable gas to the outside.

A second exhaust fan 280 may be disposed at an exhaust port of each battery module 220, to improve a speed at which the battery module 220 exhausts high-temperature and high-pressure flammable gas to the protection housing, and rapidly diffuse the high-temperature and high-pressure flammable gas in the second region 320 into the entire second region 320, thereby reducing a concentration of the local flammable gas and improving efficiency of heat exchange between the inside and the outside. The high-temperature and high-pressure flammable gas exhausted by the battery module usually includes flammable gas such as carbon monoxide (CO) or methane (CH₄). If the battery module 220 exhausts the high-temperature and high-pressure flammable gas to the outside, the gas may converge in a local region. This causes a relatively high concentration of the flammable gas in the region, which easily causes explosion. Therefore, the second exhaust fan 280 needs to be disposed at the exhaust port of each battery module 220, to blow the exhausted high-temperature and high-pressure flammable gas into the second region 320, and diffuse the gas into the entire second region 320, thereby reducing a concentration of the flammable gas in a local region.

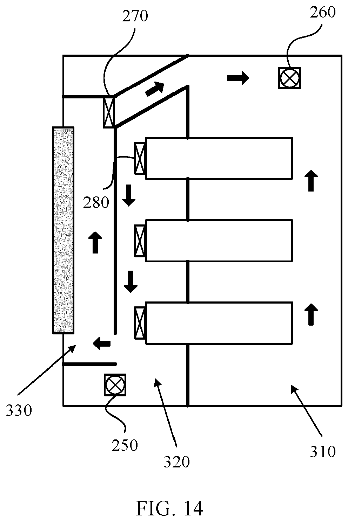

As shown in FIG. 13, an example in which the control unit 230 controls the first exhaust assembly 250 to exhaust gas and the second exhaust assembly 260 to inhale gas is used. The gas inhaled by the second exhaust assembly 260 enters the second region 320 through the heat dissipation channel 330, then flows into the first exhaust assembly 250 together with high-temperature and high-pressure flammable gas exhausted by each second exhaust fan 280, and is exhausted to the outside of the protection housing 210 through the first exhaust assembly 250. As shown in FIG. 14, an example in which the control unit 230 controls the first exhaust assembly 250 to inhale gas and the second exhaust assembly 260 to exhaust gas is used. The gas inhaled by the first exhaust assembly 250 flows into the heat dissipation channel 330 together with high-temperature and high-pressure flammable gas exhausted by each second exhaust fans 280, then enters the first region 310, and is finally exhausted to the outside of the protection housing 210 through the second exhaust assembly 260.

Optionally, the second exhaust fan 280 may be electrically connected to the battery module 220. When a ventilation valve of the battery module 220 exhausts high-temperature and high-pressure flammable gas to the outside, the second exhaust fan 280 is directly triggered to operate. The second exhaust fan 280 may alternatively be electrically connected to the control unit 230. When detecting that the battery module 220 exhausts high-temperature and high-pressure flammable gas to the outside, the control unit 230 controls the second exhaust fan 280 to operate. Another manner may be used. This is not limited in this application.

If a structure of the battery module 220 is conductive, that is, gas in the first region 310 may enter the second region 320 through the battery module 220, and air flow circulation may be formed inside the protection housing 210, an effect of heat dissipation is further improved. With reference to FIG. 13, an example in which the control unit 230 controls the first exhaust assembly 250 to exhaust gas and the second exhaust assembly 260 to inhale gas is used. After the second exhaust assembly 260 inhales the gas, one part of the gas enters the second region 320 through the heat dissipation channel 330, and the other part of the gas enters the battery modules 220 through the first region 310. In a process of exhausting the high-temperature and high-pressure flammable gas in the battery module 220, the second exhaust fan 280 exhausts the gas entering the battery module 220 into the second region 320, and the first exhaust assembly 250 exhausts all gas to the outside of the protection housing 210. In this solution, a part of gas is enabled to flow into the second region 320 through the battery module 220, so that heat in the battery module 220 can be taken away, thereby greatly reducing a temperature of the battery module 220.

In this embodiment of this application, the second exhaust fan 280 is disposed at the exhaust port of each battery module 220. This not only can improve a speed at which the battery module 220 exhausts high-temperature and high-pressure flammable gas into the protection housing 210, but also can rapidly diffuse the high-temperature and high-pressure flammable gas in the second region 320 into the entire second region 320, thereby reducing a concentration of the local flammable gas and improving efficiency of heat exchange between the inside and the outside. If the battery module 220 is a conductive structure, a part of gas is enabled to flow into the second region 320 through the battery module 220, so that heat in the battery module 220 can be taken away, thereby greatly reducing a temperature of the battery module 220.

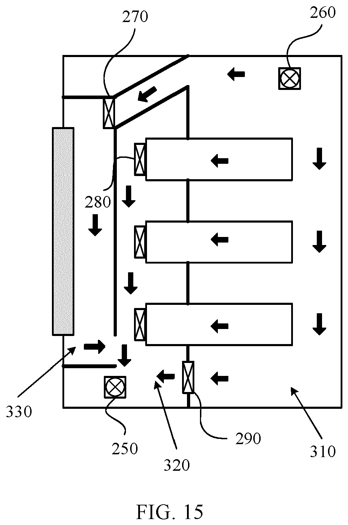

At least one third exhaust fan 290 may be disposed on the isolation baffle 240, so that gas in the first region 310 flows into the second region 320, or gas in the second region 320 flows into the first region 310. With reference to FIG. 15, an example in which the control unit 230 controls the first exhaust assembly 250 to exhaust gas and the second exhaust assembly 260 to inhale gas is used. In this case, the control unit 230 controls the third exhaust fan 290 to exhaust the gas in the first region 310 into the second region 320. After the second exhaust assembly 260 inhales the gas, one part of the gas enters the second region 320 through the heat dissipation channel 330, and the other part of the gas enters the second region 320 through the third exhaust fan 290. Finally, the first exhaust assembly 250 exhausts, to the outside of the protection housing 210, the high-temperature and high-pressure flammable gas exhausted by the battery module and the gas passing through the heat dissipation channel 330 and the third exhaust fan 290 together. In the solution, the at least one third exhaust fan 290 is disposed on the isolation baffle 240, so that heat in the first region 310 may be brought into the second region 320, and is taken out of the protection housing 210 through the first exhaust assembly 250, thereby improving efficiency of reducing a temperature of the battery module 220.

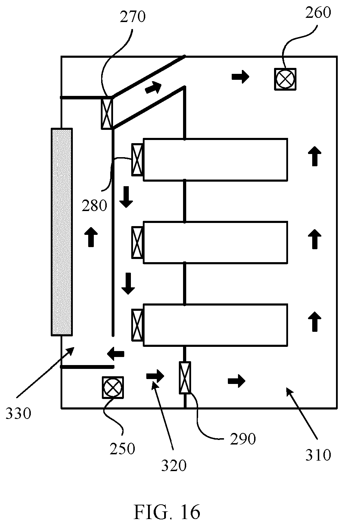

With reference to FIG. 16, an example in which the control unit 230 controls the first exhaust assembly 250 to inhale gas and the second exhaust assembly 260 to exhaust gas is used. In this case, the control unit 230 controls the third exhaust fan 290 to exhaust the gas in the second region 320 into the first region 310. After the first exhaust assembly 250 inhales the gas, the gas converges with the high-temperature and high-pressure flammable gas exhausted by each battery module 220, to directly reduce a temperature of the gas and reduce a concentration of flammable gas in the gas. Then, one part of the gas enters the first region 310 through the heat dissipation channel 330, and the other part of the gas is exhausted into the first region 310 through the third exhaust fan 290. Finally, the gas is exhausted to the outside of the protection housing 210 through the second exhaust assembly 260. In this solution, the at least one third exhaust fan 290 is disposed on the isolation baffle 240, so that the gas in the second region 320 can be exhausted into the first region, to take away heat in the first region 310, and improve efficiency of reducing a temperature of the battery module 220.

In this embodiment of this application, the at least one third exhaust fan 290 is disposed on the isolation baffle 240, so that the gas in the first region 310 flows into the second region 320, or the gas in the second region 320 flows into the first region 310. Therefore, heat generated by the battery module 220 in the first region 310 is taken out of the protection housing 210, thereby further reducing a temperature of the battery module 220.

An embodiment of this application provides an energy storage device, where the energy storage device includes at least one battery apparatus described in FIG. 3 to FIG. 16 and the foregoing corresponding protection solutions. The battery apparatus may be electrically connected to at least one device using electric energy to provide electric energy, or may be electrically connected to a power supply device to store energy. Because the energy storage device includes the battery apparatus, the energy storage device has all or at least some of advantages of the battery apparatus. The energy storage device may be an electric vehicle, an outdoor cabinet, a base station, a solar power generation system, or the like.

In the descriptions of this specification, the described specific features, structures, materials, or characteristics may be combined in a proper manner in any one or more of embodiments or examples.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments**,** within the scope of the appended claims.

## Claims

1. A battery apparatus, comprising:
a protection housing (210);
at least one battery module (220), disposed in the protection housing;
at least one first exhaust assembly (250), disposed on the protection housing;
at least one second exhaust assembly (260), disposed on the protection housing; and
a control unit (230), configured to control the at least one first exhaust assembly to be in a first state and the at least one second exhaust assembly to be in a second state, or control the at least one first exhaust assembly to be in the second state and the at least one second exhaust assembly to be in the first state, wherein the first state is that gas outside the protection housing is inhaled into the protection housing, and the second state is that gas inside the protection housing is exhausted to the outside of the protection housing, to exhaust, out of the battery apparatus, a high-temperature and high-pressure gas generated by the at least one battery module, and take away heat inside the protection housing;
further comprising: an isolation baffle (240), wherein the isolation baffle is fastened inside the protection housing, and divides the protection housing into a first region (310) and a second region (320), and the first region communicates with the second region; and
the at least one first exhaust assembly communicates with the second region, and the at least one second exhaust assembly communicates with the first region;
wherein each battery module passes through and is fastened to the isolation baffle, one part of each battery module is in the first region, and the other part of each battery module is in the second region.

2. The battery apparatus according to claim **1,** further comprising:
at least one temperature sensor that is disposed inside the protection housing and/or inside the at least one battery module and that is configured to detect a temperature inside the protection housing and a temperature inside the battery module;
the control unit is specifically configured to: receive a temperature value detected by the at least one temperature sensor, and determine whether the temperature value is greater than a specified threshold; and
when the temperature value is greater than the specified threshold, control the at least one first exhaust assembly to be in the first state and the at least one second exhaust assembly to be in the second state, or control the at least one first exhaust assembly to be in the second state and the at least one second exhaust assembly to be in the first state.

3. The battery apparatus according to claim 1, further comprising:
at least one gas sensor that is disposed inside the protection housing and that is configured to detect gas composition inside the protection housing;
the control unit is specifically configured to: receive a detection result sent by the at least one gas sensor, and determine whether the detection result has a specified gas; and
when the detection result comprises the specified gas, control the at least one first exhaust assembly to be in the first state and the at least one second exhaust assembly to be in the second state, or control the at least one first exhaust assembly to be in the second state and the at least one second exhaust assembly to be in the first state.

4. The battery apparatus according to any one of claims 1 to 3, wherein when the at least one first exhaust assembly is not in the first state and the second state, the second region is isolated from the outside of the protection housing; and
when the at least one second exhaust assembly is not in the first state and the second state, the first region is isolated from the outside of the protection housing.

5. The battery apparatus according to any one of claims 1 to 4, wherein the at least one first exhaust assembly and the at least one second exhaust assembly are respectively disposed on surfaces of different side faces of the protection housing.

6. The battery apparatus according to any one of claims 1 to 5, further comprising:
a heat dissipation channel (330), wherein one port of the heat dissipation channel communicates with the first region, and the other port of the heat dissipation channel communicates with the second region, so that gas in the first region flows into the second region, or gas in the second region flows into the first region.

7. The battery apparatus according to claim 6, wherein the heat dissipation channel is disposed on the control unit, and a part of the heat dissipation channel comprises a housing of the control unit.

8. The battery apparatus according to claim 6 or 7, further comprising:
at least one first exhaust fan (270) disposed in the heat dissipation channel, so that gas in the first region flows into the second region, or gas in the second region flows into the first region.

9. The battery apparatus according to any one of claims 1 to 8, further comprising:
at least one second exhaust fan (280) that is respectively disposed at an exhaust port of the at least one battery module, so that gas in the first region flows into the second region through the battery module, or gas in the second region flows into the first region through the battery module.

10. The battery apparatus according to any one of claims 1 to 9, wherein the exhaust port of the at least one battery module is located in the second region.

11. The battery apparatus according to any one of claims 1 to 10, further comprising:
at least one third exhaust fan (290) disposed on the isolation baffle, so that gas in the first region flows into the second region, or gas in the second region flows into the first region.

12. A method for controlling a battery apparatus to exhaust gas, comprising:
receiving detection data of a detection unit, wherein the detection data is a temperature value and/or gas composition; and
when the detection data is greater than a specified threshold and/or comprises a specified gas, controlling at least one first exhaust assembly to be in a first state and at least one second exhaust assembly to be in a second state, or controlling the at least one first exhaust assembly to be in the second state and the at least one second exhaust assembly to be in the first state, wherein the first state is that gas outside the protection housing is inhaled into the protection housing, the second state is that gas inside the protection housing is exhausted to the outside of the protection housing, the at least one first exhaust assembly and the at least one second exhaust assembly are separately disposed on the protection housing, and at least one battery module is embedded in an isolation baffle;
wherein the isolation baffle is disposed inside the protection housing, the isolation baffle divides the inside of the protection housing into a first region and a second region, the first region communicates with the second region, the at least one first exhaust assembly communicates with the second region, the at least one second exhaust assembly communicates with the first region;
wherein each battery module passes through and is fastened to the isolation baffle, one part of each battery module is in the first region, and the other part of each battery module is in the second region.

13. The method according to claim 12, wherein the method further comprises:
controlling the at least one first exhaust assembly to successively exhaust gas outside the protection housing into the second region and the first region, and then enabling the gas to be exhausted to the outside of the protection housing from the at least one second exhaust assembly; or controlling the at least one second exhaust assembly to successively exhaust gas outside the protection housing into the first region and the second region, and then enabling the gas to be exhausted to the outside of the protection housing from the at least one first exhaust assembly.

## Patentansprüche

1. Batterievorrichtung, umfassend:
ein Schutzgehäuse (210);
mindestens ein Batteriemodul (220), das in dem Schutzgehäuse angeordnet ist;
mindestens eine erste Ausstoßbaugruppe (250), die auf dem Schutzgehäuse angeordnet ist;
mindestens eine zweite Ausstoßbaugruppe (260), die auf dem Schutzgehäuse angeordnet ist; und
eine Steuereinheit (230), die dazu konfiguriert ist, die mindestens eine erste Ausstoßbaugruppe zu steuern, um sich in einem ersten Zustand zu befinden, und die mindestens eine zweite Ausstoßbaugruppe zu steuern, um sich in einem zweiten Zustand zu befinden, oder die mindestens eine erste Ausstoßbaugruppe zu steuern, um sich in dem zweiten Zustand zu befinden, und die mindestens eine zweite Ausstoßbaugruppe zu steuern, um sich in dem ersten Zustand zu befinden, wobei der erste Zustand darin besteht, dass Gas außerhalb des Schutzgehäuses in das Schutzgehäuse eingesaugt wird, und der zweite Zustand darin besteht, dass Gas innerhalb des Schutzgehäuses zu der Außenseite des Schutzgehäuses ausgestoßen wird, um aus der Batterievorrichtung ein Gas mit hoher Temperatur und hohem Druck, das durch das mindestens eine Batteriemodul erzeugt wird, auszustoßen und Wärme innerhalb des Schutzgehäuses abzuführen;
ferner umfassend: eine Isolationsplatte (240), wobei die Isolationsplatte innerhalb des Schutzgehäuses befestigt ist und das Schutzgehäuse in einen ersten Bereich (310) und einen zweiten Bereich (320) unterteilt und der erste Bereich mit dem zweiten Bereich kommuniziert; und
die mindestens eine erste Ausstoßbaugruppe mit dem zweiten Bereich kommuniziert und die mindestens eine zweite Ausstoßbaugruppe mit dem ersten Bereich kommuniziert;
wobei jedes Batteriemodul durch die Isolationsplatte hindurch verläuft und an dieser befestigt ist, sich ein Teil jedes Batteriemoduls in dem ersten Bereich befindet und sich der andere Teil jedes Batteriemoduls in dem zweiten Bereich befindet.

2. Batterievorrichtung nach Anspruch 1, ferner umfassend:
mindestens einen Temperatursensor, der in dem Schutzgehäuse und/oder innerhalb des mindestens einen Batteriemoduls angeordnet ist und dazu konfiguriert ist, eine Temperatur innerhalb des Schutzgehäuses und eine Temperatur innerhalb des Batteriemoduls zu detektieren;
wobei die Steuereinheit speziell zu Folgendem konfiguriert ist:
Empfangen eines Temperaturwerts, der durch den mindestens einen Temperatursensor detektiert wird, und Bestimmen, ob der Temperaturwert größer als ein definierter Schwellenwert ist; und
wenn der Temperaturwert größer als der definierte Schwellenwert ist, Steuern der mindestens einen ersten Ausstoßbaugruppe, um sich in dem ersten Zustand zu befinden, und Steuern der mindestens einen zweiten Ausstoßbaugruppe, um sich in dem zweiten Zustand zu befinden, oder Steuern der mindestens einen ersten Ausstoßbaugruppe, um sich in dem zweiten Zustand zu befinden, und Steuern der mindestens einen zweiten Ausstoßbaugruppe, um sich in dem ersten Zustand zu befinden.

3. Batterievorrichtung nach Anspruch 1, ferner umfassend:
mindestens einen Gassensor, der innerhalb des Schutzgehäuses angeordnet ist und der dazu konfiguriert ist, eine Gaszusammensetzung innerhalb des Schutzgehäuses zu detektieren;
wobei die Steuereinheit speziell zu Folgendem konfiguriert ist:
Empfangen eines Detektionsergebnisses, das durch den mindestens einen Gassensor gesendet wird, und Bestimmen, ob das Detektionsergebnis ein definiertes Gas aufweist; und
wenn das Detektionsergebnis das definierte Gas umfasst, Steuern der mindestens einen ersten Ausstoßbaugruppe, um sich in dem ersten Zustand zu befinden, und Steuern der mindestens einen zweiten Ausstoßbaugruppe, um sich in dem zweiten Zustand zu befinden, oder Steuern der mindestens einen ersten Ausstoßbaugruppe, um sich in dem zweiten Zustand zu befinden, und Steuern der mindestens einen zweiten Ausstoßbaugruppe, um sich in dem ersten Zustand zu befinden.

4. Batterievorrichtung nach einem der Ansprüche 1 bis 3, wobei, wenn sich die mindestens eine erste Ausstoßbaugruppe nicht in dem ersten Zustand und dem zweiten Zustand befindet, der zweite Bereich von der Außenseite des Schutzgehäuses isoliert wird; und wenn sich die mindestens eine zweite Ausstoßbaugruppe nicht in dem ersten Zustand und dem zweiten Zustand befindet, der erste Bereich von der Außenseite des Schutzgehäuses isoliert wird.

5. Batterievorrichtung nach einem der Ansprüche 1 bis 4, wobei die mindestens eine erste Ausstoßbaugruppe und die mindestens eine zweite Ausstoßbaugruppe jeweils auf Oberflächen unterschiedlicher Seitenflächen des Schutzgehäuses angeordnet sind.

6. Batterievorrichtung nach einem der Ansprüche 1 bis 5, ferner umfassend:
einen Wärmeableitungskanal (330), wobei ein Anschluss des Wärmeableitungskanals mit dem ersten Bereich kommuniziert und der andere Anschluss des Wärmeableitungskanals mit dem zweiten Bereich kommuniziert, sodass Gas in dem ersten Bereich in den zweiten Bereich strömt oder Gas in dem zweiten Bereich in den ersten Bereich strömt.

7. Batterievorrichtung nach Anspruch 6, wobei der Wärmeableitungskanal an der Steuereinheit angeordnet ist und ein Teil des Wärmeableitungskanals ein Gehäuse der Steuereinheit umfasst.

8. Batterievorrichtung nach Anspruch 6 oder 7, ferner umfassend: mindestens ein erstes Ausstoßgebläse (270), das in dem Wärmeableitungskanal angeordnet ist, sodass Gas in dem ersten Bereich in den zweiten Bereich strömt oder Gas in dem zweiten Bereich in den ersten Bereich strömt.

9. Batterievorrichtung nach einem der Ansprüche 1 bis 8, ferner umfassend:
mindestens ein zweites Ausstoßgebläse (280), das jeweils an einem Ausstoßanschluss des mindestens einen Batteriemoduls angeordnet ist, sodass Gas in dem ersten Bereich durch das Batteriemodul hindurch in den zweiten Bereich strömt oder Gas in dem zweiten Bereich durch das Batteriemodul hindurch in den ersten Bereich strömt.

10. Batterievorrichtung nach einem der Ansprüche 1 bis 9, wobei sich der Ausstoßanschluss des mindestens einen Batteriemoduls in dem zweiten Bereich befindet.

11. Batterievorrichtung nach einem der Ansprüche 1 bis 10, ferner umfassend:
mindestens ein drittes Ausstoßgebläse (290), das auf der Isolierplatte angeordnet ist, sodass Gas in dem ersten Bereich in den zweiten Bereich strömt oder Gas in dem zweiten Bereich in den ersten Bereich strömt.

12. Verfahren zum Steuern einer Batterievorrichtung, um Gas auszustoßen, umfassend:
Empfangen von Detektionsdaten einer Detektionseinheit, wobei die Detektionsdaten ein Temperaturwert und/oder eine Gaszusammensetzung sind; und
wenn die Detektionsdaten größer als ein definierter Schwellenwert sind und/oder ein definiertes Gas umfassen, Steuern mindestens einer ersten Ausstoßbaugruppe, um sich in einem ersten Zustand zu befinden, und Steuern mindestens einer zweiten Ausstoßbaugruppe, um sich in einem zweiten Zustand zu befinden, oder Steuern der mindestens einen ersten Ausstoßbaugruppe, um sich in dem zweiten Zustand zu befinden, und Steuern der mindestens einen zweiten Ausstoßbaugruppe, um sich in dem ersten Zustand zu befinden, wobei der erste Zustand darin besteht, dass Gas außerhalb des Schutzgehäuses in das Schutzgehäuse eingesaugt wird, der zweite Zustand darin besteht, dass Gas innerhalb des Schutzgehäuses zu der Außenseite des Schutzgehäuses ausgestoßen wird, die mindestens eine erste Ausstoßbaugruppe und die mindestens eine zweite Ausstoßbaugruppe separat auf dem Schutzgehäuse angeordnet sind und mindestens ein Batteriemodul in eine Isolationsplatte eingebettet ist;
wobei die Isolationsplatte innerhalb des Schutzgehäuses angeordnet ist, die Isolationsplatte das Innere des Schutzgehäuses in einen ersten Bereich und einen zweiten Bereich unterteilt, der erste Bereich mit dem zweiten Bereich kommuniziert, die mindestens eine erste Ausstoßbaugruppe mit dem zweiten Bereich kommuniziert und die mindestens eine zweite Ausstoßbaugruppe mit dem ersten Bereich kommuniziert;
wobei jedes Batteriemodul durch die Isolationsplatte hindurch verläuft und an dieser befestigt ist, sich ein Teil jedes Batteriemoduls in dem ersten Bereich befindet und sich der andere Teil jedes Batteriemoduls in dem zweiten Bereich befindet.

13. Verfahren nach Anspruch 12, wobei das Verfahren ferner Folgendes umfasst:
Steuern der mindestens einen ersten Ausstoßbaugruppe, um nacheinander Gas außerhalb des Schutzgehäuses in den zweiten Bereich und den ersten Bereich auszustoßen, und anschließendes Ermöglichen, dass das Gas von der mindestens einen zweiten Ausstoßbaugruppe zu der Außenseite des Schutzgehäuses ausgestoßen wird; oder Steuern der mindestens einen zweiten Ausstoßbaugruppe, um nacheinander Gas außerhalb des Schutzgehäuses in den ersten Bereich und den zweiten Bereich auszustoßen, und anschließendes Ermöglichen, dass das Gas von der mindestens einen ersten Ausstoßbaugruppe zu der Außenseite des Schutzgehäuses ausgestoßen wird.

## Revendications

1. Appareil de batterie, comprenant :
un boîtier de protection (210) ;
au moins un module de batterie (220), disposé dans le boîtier de protection ;
au moins un premier ensemble d'échappement (250), disposé sur le boîtier de protection ;
au moins un second ensemble d'échappement (260), disposé sur le boîtier de protection ; et
une unité de commande (230), configurée pour commander l'au moins un premier ensemble d'échappement pour qu'il soit dans un premier état et l'au moins un second ensemble d'échappement pour qu'il soit dans un second état, ou commander l'au moins un premier ensemble d'échappement pour qu'il soit dans le second état et l'au moins un second ensemble d'échappement pour qu'il soit dans le premier état, dans lequel le premier état est le fait que le gaz à l'extérieur du boîtier de protection soit inhalé dans le boîtier de protection, et le second état est le fait que le gaz à l'intérieur du boîtier de protection soit évacué vers l'extérieur du boîtier de protection, pour évacuer, hors de l'appareil de batterie, un gaz à haute température et haute pression généré par l'au moins un module de batterie, et éliminer la chaleur à l'intérieur du boîtier de protection ;
comprenant également : un déflecteur d'isolation (240), dans lequel le déflecteur d'isolation est fixé à l'intérieur du boîtier de protection et divise le boîtier de protection en une première région (310) et une seconde région (320), et la première région communique avec la seconde région ; et
l'au moins un premier ensemble d'échappement communique avec la seconde région, et l'au moins un second ensemble d'échappement communique avec la première région ;
dans lequel chaque module de batterie traverse et est fixé au déflecteur d'isolation, une partie de chaque module de batterie se trouve dans la première région, et l'autre partie de chaque module de batterie se trouve dans la seconde région.

2. Appareil de batterie selon la revendication 1, comprenant également :
au moins un capteur de température qui est disposé à l'intérieur du boîtier de protection et/ou à l'intérieur de l'au moins un module de batterie et qui est configuré pour détecter une température à l'intérieur du boîtier de protection et une température à l'intérieur du module de batterie ;
l'unité de commande est spécifiquement configurée pour :
recevoir une valeur de température détectée par l'au moins un capteur de température, et déterminer si la valeur de température est supérieure à un seuil spécifié ; et
lorsque la valeur de température est supérieure au seuil spécifié, commander l'au moins un premier ensemble d'échappement pour qu'il soit dans le premier état et l'au moins un second ensemble d'échappement pour qu'il soit dans le second état, ou commander l'au moins un premier ensemble d'échappement pour qu'il soit dans le second état et l'au moins un second ensemble d'échappement pour qu'il soit dans le premier état.

3. Appareil de batterie selon la revendication 1, comprenant également :
au moins un capteur de gaz qui est disposé à l'intérieur du boîtier de protection et qui est configuré pour détecter la composition du gaz à l'intérieur du boîtier de protection ;
l'unité de commande est spécifiquement configurée pour :
recevoir un résultat de détection envoyé par l'au moins un capteur de gaz, et déterminer si le résultat de détection contient un gaz spécifié ; et
lorsque le résultat de détection comprend le gaz spécifié, commander l'au moins un premier ensemble d'échappement pour qu'il soit dans le premier état et l'au moins un second ensemble d'échappement pour qu'il soit dans le second état, ou commander l'au moins un premier ensemble d'échappement pour qu'il soit dans le second état et l'au moins un second ensemble d'échappement pour qu'il soit dans le premier état.

4. Appareil de batterie selon l'une quelconque des revendications 1 à 3, dans lequel, lorsque l'au moins un premier ensemble d'échappement n'est ni dans le premier état ni dans le second état, la seconde région est isolée de l'extérieur du boîtier de protection ; et
lorsque l'au moins un second ensemble d'échappement n'est ni dans le premier état ni dans le second état, la première région est isolée de l'extérieur du boîtier de protection.

5. Appareil de batterie selon l'une quelconque des revendications 1 à 4, dans lequel l'au moins un premier ensemble d'échappement et l'au moins un second ensemble d'échappement sont respectivement disposés sur des surfaces de différentes faces latérales du boîtier de protection.

6. Appareil de batterie selon l'une quelconque des revendications 1 à 5, comprenant également :
un canal de dissipation de chaleur (330), dans lequel un port du canal de dissipation de chaleur communique avec la première région, et l'autre port du canal de dissipation de chaleur communique avec la seconde région, de sorte que le gaz dans la première région s'écoule dans la seconde région, ou le gaz dans la seconde région s'écoule dans la première région.

7. Appareil de batterie selon la revendication 6, dans lequel le canal de dissipation de chaleur est disposé sur l'unité de commande, et une partie du canal de dissipation de chaleur comprend un boîtier de l'unité de commande.

8. Appareil de batterie selon la revendication 6 ou 7, comprenant également :
au moins un premier ventilateur d'échappement (270) disposé dans le canal de dissipation de chaleur, de sorte que le gaz dans la première région s'écoule dans la seconde région, ou que le gaz dans la seconde région s'écoule dans la première région.

9. Appareil de batterie selon l'une quelconque des revendications 1 à 8, comprenant également :
au moins un deuxième ventilateur d'échappement (280) qui est respectivement disposé au niveau d'un port d'échappement de l'au moins un module de batterie, de sorte que le gaz dans la première région s'écoule dans la seconde région à travers le module de batterie, ou que le gaz dans la seconde région s'écoule dans la première région à travers le module de batterie.

10. Appareil de batterie selon l'une quelconque des revendications 1 à 9, dans lequel le port d'échappement de l'au moins un module de batterie se trouve dans la seconde région.

11. Appareil de batterie selon l'une quelconque des revendications 1 à 10, comprenant également :
au moins un troisième ventilateur d'échappement (290) disposé sur le déflecteur d'isolation, de sorte que le gaz dans la première région s'écoule dans la seconde région, ou que le gaz dans la seconde région s'écoule dans la première région.

12. Procédé de commande d'un appareil de batterie pour évacuer des gaz, comprenant :
la réception de données de détection d'une unité de détection, dans lequel les données de détection sont une valeur de température et/ou une composition de gaz ; et
lorsque les données de détection sont supérieures à un seuil spécifié et/ou comprennent un gaz spécifié, la commande d'au moins un premier ensemble d'échappement pour qu'il soit dans un premier état et au moins un second ensemble d'échappement pour qu'il soit dans un second état, ou la commande de l'au moins un premier ensemble d'échappement pour qu'il soit dans le second état et l'au moins un second ensemble d'échappement pour qu'il soit dans le premier état, dans lequel le premier état est que le gaz à l'extérieur du boîtier de protection est inhalé dans le boîtier de protection, le second état est que le gaz à l'intérieur du boîtier de protection est évacué vers l'extérieur du boîtier de protection, l'au moins un premier ensemble d'échappement et l'au moins un second ensemble d'échappement sont disposés séparément sur le boîtier de protection, et au moins un module de batterie est intégré dans un déflecteur d'isolation ;
dans lequel le déflecteur d'isolation est disposé à l'intérieur du boîtier de protection, le déflecteur d'isolation divise l'intérieur du boîtier de protection en une première région et une seconde région, la première région communique avec la seconde région, l'au moins un premier ensemble d'échappement communique avec la seconde région, l'au moins un second ensemble d'échappement communique avec la première région ;
dans lequel chaque module de batterie traverse et est fixé au déflecteur d'isolation, une partie de chaque module de batterie se trouve dans la première région, et l'autre partie de chaque module de batterie se trouve dans la seconde région.

13. Procédé selon la revendication 12, dans lequel le procédé comprend également :
la commande de l'au moins un premier ensemble d'échappement pour évacuer successivement le gaz à l'extérieur du boîtier de protection dans la seconde région et la première région, puis permettre au gaz d'être évacué vers l'extérieur du boîtier de protection à partir de l'au moins un second ensemble d'échappement ; ou la commande de l'au moins un second ensemble d'échappement pour évacuer successivement le gaz à l'extérieur du boîtier de protection dans la première région et la seconde région, puis permettre au gaz d'être évacué vers l'extérieur du boîtier de protection à partir de l'au moins un premier ensemble d'échappement.
